Europäisches Patentamt

European Patent Office

Office européen des brevets

(19)

(11) Publication number: **0 067 125**
**B1**

(12) **EUROPEAN PATENT SPECIFICATION**

(45) Date of publication of patent specification: **19.02.86**

(21) Application number: **82830025.1**

(22) Date of filing: **05.02.82**

(51) Int. Cl.⁴: **A 23 C 9/18, A 23 G 3/00**

(54) Method for production of milk and sugars candies.

(30) Priority: **05.06.81 IT 4862181**

(43) Date of publication of application:
**15.12.82 Bulletin 82/50**

(45) Publication of the grant of the patent:
**19.02.86 Bulletin 86/08**

(84) Designated Contracting States:
**AT BE CH DE FR GB LI LU NL SE**

(56) References cited:
**DE-B-1 301 230**
**FR-A- 720 488**
**NL-A-6 800 635**

(73) Proprietor: **Società di Esportazione Polenghi Lombardo SPA**
**Viale Corsica, 55**
**I-20133 Milano (IT)**

(72) Inventor: **Razza, Luigi, Dr.**
**Viale Corsica, 55**
**I-20133 Milano (IT)**
Inventor: **Veli, Paolo Berti Arnoaldi, Dr.**
**Viale Corsica, 55**
**Milano (IT)**

Courier Press, Leamington Spa, England.

EP 0 067 125 B1

## Description

The present invention relates to a method for the manufacture of milk and sugar based tablets.

Such tablets, containing milk and sugars in a predetermined ratio, are particularly appreciated by consumers for their agreeable milky taste and their nutritional value.

These tablets, which are made by mixing the milk and sugars, drying and powdering the mixture, and then compressing the resulting powder, tend to have a friable consistency such that they crumble easily.

In order to avoid this disadvantage, it has been proposed to add to the ingredients suitable additives, so-called binders, which give the tablets the firm consistency desired.

The addition of these binders, however, gives rise to other disadvantages, such as a reduction in the nutritional value, an increase in cost, as well as a deterioration in the similarity to a perfectly natural taste to which the young consumers, for whom these tablets are particularly intended, are especially sensitive.

DE—B—1301230 discloses a process for the manufacture of dried milk products in which an alkaliphosphate is first added to the milk, followed by a quantity of lactose. The resulting mixture is then dried to a powder and a further amount of sugar is added. In order to form tablets, the powder must first be humidified with water and then compressed.

The problem which is at the basis of the present invention is that of devising a method for the manufacture of tablets of the type specified, having characteristics which overcome the disadvantages cited with reference to the prior art.

The idea which has given rise to the present invention is that of using one of the ingredients as the binder, in particular a portion of the sugars themselves.

On the basis of this idea, and in order to solve the aforesaid technical problem, the present invention provides a method of the type specified, which is characterised in that it comprises the following steps:

— preparing a quantity of milk and a quantity of simple and complex sugars which comply with the predetermined ratio;

— mixing milk with 30% to 60% of the quantity of sugars;

— drying and powdering the mixture obtained;

— mixing the resulting powder with the remainder of the sugars; and

— compressing the mixture thus obtained into tablets.

Further characteristics and advantages of the method according to the present invention will emerge from the following description of one embodiment, given by way of non-limiting example.

In accordance with this method, there was provided 10,000 litres of partially-skimmed, liquid cow's milk, as well as a quantity of simple and more complex sugars equivalent to 16%.

The milk was mixed with 60% of the quantity of sugars, which dissolved to form a syrup. The mixing was continued for 50 minutes, and the temperature of the mixture was maintained between 100°C and 105°C.

The mixture thus obtained was dried by vacuum dehydration and powdered by a spray method.

The remaining 40% of the quantity of sugars was mixed, under dry conditions, with the powder obtained.

The resulting powder was compressed in a conventional tablet press to form parallelepipedal tablets having a square base with 18 mm sides, a height of 6 mm, and a unit weight of 2.7 g.

The tablets made in this way were not crumbly and had a firm consistency.

Other tests were conducted subsequently by reducing the quantity of sugars mixed with the milk to 30%, and tablets of a satisfactory consistency were still obtained.

The best result was obtained when the percentage was 40%.

The first test described was repeated with the difference that the remainder of the sugars were previously mixed with 12 kg of cocoa powder. Tablets with a satisfactory consistency, in which the cocoa taste was combined with that of milk in a pleasant and agreeable manner, were obtained.

This test was repeated using a substance with a different taste, namely coffee, instead of cocoa.

1.7 kg of freeze-dried coffee was added to the remainder of the sugars. With these tablets, it was again shown that, under test, the added flavour kept its character and blended agreeably with that of the milk.

Other similar tests, with the same positive results, were conducted using mint and strawberry flavours.

The prior mixing of the sugars and the flavouring substances in the dry state allowed the flavouring substances to be dispersed finely in the tablets, while maintaining their flavour substantially unaltered.

The main advantage of the method according to the invention lies in the fact that it allows milk-based tablets, including flavoured tablets, to be manufactured with the desired firm consistency and a most natural taste.

## Claims

1. Method for the manufacture of tablets based on milk and simple and complex sugars in a predetermined ratio, characterised in that it comprises the successive steps of:

— preparing a quantity of milk and a quantity of sugars to comply with said ratio;

— mixing the milk with 30% to 60% of the quantity of sugars;

— drying and powdering the mixture obtained;

— dry mixing the resulting powder with the remainder of the sugars; and

— dry compressing the mixture thus obtained into tablets.

2. Method according to Claim 1, characterised in that 40% of the sugars are mixed with the milk.

3. Method according to Claims 1 and 2, characterised in that the remainder of the sugars are previously mixed with a flavouring substance chosen from cocoa, coffee powder, strawberry and mint.

**Patentansprüche**

1. Verfahren zur Herstellung von aus Milch und aus einfachen und complexen Zuckerarten in vorbestimmtem Verhältnis bestehenden Täfelchen, dadurch gekennzeichnet, dass es folgende aufeinanderfolgende Stufen umfasst:
— eine dem genannten Verhältnis entsprechende Menge von Milch und Zuckerarten vorzubereiten;
— die Milch mit 30% bis 60% der Menge von Zuckerarten zu mischen;
— die erhaltene Mischung zu trocknen und zu pulvern;
— das sich ergebende Pulver mit den restlichen Zuckerarten trocken zu mischen; und
— die so erhaltene Mischung in Täfelchen trocken zu pressen.

2. Verfahren nach Anspruch 1, dadurch gekennzeichnet, dass 40% der Zuckerarten mit der Milch gemischt werden.

3. Verfahren nach Ansprüchen 1 und 2, dadurch gekennzeichnet, dass die restliche Zuckerarten vorher mit einem aromatischen Stoff gemischt werden, gewählt zwischen Kakao, Kaffeepulver, Erdbeeren und Pfefferminz.

**Revendications**

1. Méthode pour fabriquer des tablettes à base de lait, de sucres simples et complèxes en un rapport prédéterminé, caractérisée en ce qu'elle comprend les phases successives de:
— préparation d'une quantité de lait et d'une quantité de sucres à se conformer au dit rapport;
— mélangement du lait avec 30% à 60% de la quantité des sucres;
— séchement et pulverisation du mélange obtenu;
— mélangement à sec de la poudre résultante avec le restant des sucres; et
— compression à sec du mélange ainsi obtenu dans des tablettes.

2. Méthode selon la revendication 1, caractérisée en ce que 40% des sucres sont mélangés avec le lait.

3. Méthode selon les revendications 1 et 2, caractérisée en ce que le restant des sucres est mélangé en avance avec une substance savourante choisie entre chocolat, café en poudre, fraise et mint.